# EUROPEAN PATENT APPLICATION

(11) **EP 4 663 342 A1**
(43) Date of publication of application: **17.12.2025**
(21) Application number: 24753578.4
(22) Date of filing: 05.02.2024
(51) Int. Cl.: B23Q 5/04, B23Q 5/10, B23Q 11/12, B06B 1/02, B23Q 11/00, F16C 32/06, F16C 37/00

(54) **ULTRASONIC AIR BEARING SPINDLE DEVICE**

(30) Priority: 06.02.2023 KR 20230015768
(71) Applicant: RPS CO., LTD, Daejeon 34002 (KR)
(72) Inventor: LEE, Dong Heon, Daejeon 35249 (KR); HAN, Gwang Sin, Daejeon 34011 (KR); KIM, Chang Soo, Daejeon 35374 (KR); KIM, Jung Hwan, Daejeon 34109 (KR)
(74) Representative: Plougmann Vingtoft a/s
(86) International application number: PCT/KR2024/001674
(87) International publication number: WO 2024/167251

(57) **Abstract**

Provide is an ultrasonic spindle apparatus with an air bearing. The ultrasonic spindle apparatus includes a housing having an internal space defined therein, a hollow shaft part rotatably provided inside the housing, an ultrasonic generator having a hollow shape and provided in the hollow of the shaft part and configured to generate ultrasonic waves upon receiving electric power, a tool horn provided at a front end of the shaft part and coupled to the ultrasonic generator, a carbon brush configured to receive electric power from an external source and be in contact with a conductive slip ring at a rear end of the shaft, a wire configured to electrically connect the slip ring and the ultrasonic generator to each other, and a flow path defined in the housing to communicate with the outside, wherein the flow path includes: a first supply flow path configured to guide external air into the housing through a rear end of the housing, a dust discharge flow path branched from the first supply flow path and guiding the external air toward the carbon brush, and a cooling flow path branched from the first supply flow path and guiding the external air toward the ultrasonic generator.

## Description

### TECHNICAL FIELD

The present invention relates to an ultrasonic spindle apparatus, and more particularly, to an ultrasonic spindle apparatus provided with an air bearing and is capable of performing cooling and dust discharge.

### BACKGROUND ART

An ultrasonic machining apparatus using ultrasonic vibration is a device that processes grinding and cutting of hard and brittle materials by using ultrasonic vibration, and generally uses an ultrasonic spindle mounted to rotate and vibrate a cutting tool to perform processing.

Such an ultrasonic machining apparatus is used in the field of processing difficult-to-cut materials that are high in strength and brittleness and difficult to perform precision machining and grinding, such as silicon carbide (SiC), porous ceramics, reinforced glass of mobile phone touch panels, sapphire, and quartz, and the demand for ultrasonic machining apparatuses is gradually increasing.

An ultrasonic spindle mainly uses an ultrasonic oscillator and a vibrator to generate ultrasonic vibration. The ultrasonic oscillator serves to supply electric energy to the vibrator provided inside the ultrasonic spindle, and the vibrator generates ultrasonic vibration accordingly and transmits the vibration to a cutting tool located at the front end of the ultrasonic spindle. The cutting tool rotates and ultrasonically vibrates while coming into contact with a workpiece to process the workpiece. The ultrasonic spindle uses a stator fixed on the inside and a rotor fixed to a shaft in order to obtain rotational force.

Recently, for ultra-precision processing of difficult-to-cut materials, ultrasonic spindles capable of high-speed rotation have become necessary, and accordingly, ultrasonic air bearing spindles in which the shaft is levitated by an air bearing have been introduced.

In such ultrasonic air bearing spindles, a carbon brush connected to an external power source and a slip ring in electrical contact with the carbon brush are generally used to supply power to the vibrator. In this case, dust is generated along with the wear of the carbon brush, and the generated dust accumulates around the rotating shaft, causing malfunction and failure of the spindle.

In addition, heat generated by the vibrator is transferred to surrounding components, causing material change and displacement from the central rotational axis due to thermal expansion, which shortens the lifespan and deteriorates machining precision.

### [RELATED ART DOCUMENT]

### [Patent Document]

(Patent Document 1) Korean Patent No. 10-1904799

### DISCLOSURE OF THE INVENTION

### TECHNICAL PROBLEM

The present invention is to provide an ultrasonic spindle apparatus with air bearing, which is capable of discharging dust generated by wear of a carbon brush and cooling a spindle in which temperature is increased due to heat generation of a vibrator.

### TECHNICAL SOLUTION

An ultrasonic spindle apparatus with an air bearing including: a housing having an internal space defined therein; a hollow shaft part rotatably provided inside the housing; an ultrasonic generator having a hollow shape and provided in the hollow of the shaft part and configured to generate ultrasonic waves upon receiving electric power; a tool horn provided at a front end of the shaft part and coupled to the ultrasonic generator; a carbon brush configured to receive electric power from an external source and be in contact with a conductive slip ring at a rear end of the shaft; a wire configured to electrically connect the slip ring and the ultrasonic generator to each other; and a flow path defined in the housing to communicate with the outside, wherein the flow path includes: a first supply flow path configured to guide external air into the housing through a rear end of the housing; a dust discharge flow path branched from the first supply flow path and guiding the external air toward the carbon brush; and a cooling flow path branched from the first supply flow path and guiding the external air toward the ultrasonic generator.

The dust discharge flow path may include: a first dust discharge flow path configured to guide the external air to surround the rear end of the shaft; and a second dust discharge flow path configured to guide the air from the first dust discharge flow path to the outside of the housing.

The cooling flow path may include: a first inner cooling flow path penetrating through the shaft in a longitudinal direction; and a second inner cooling flow path configured to guide the air from the first inner cooling flow path to surround an outer circumferential surface of the ultrasonic generator.

The ultrasonic spindle apparatus with the air bearing may further include: a coupling pin including a pin body passing through the ultrasonic generator and coupled to the tool horn, and a pin head provided on the pin body, having a cross-sectional area greater than that of the pin body, and partially coupled to the inside of the first inner cooling flow path, wherein the cooling flow path may further include: a connecting cooling flow path configured to connect the first inner cooling flow path and the second inner cooling flow path to each other and to guide the air in the first inner cooling flow path to sequentially pass through the pin head and the ultrasonic generator.

The cooling flow path may further include an outer cooling flow path configured to guide the air from the second inner cooling flow path radially outward to cool the housing.

The ultrasonic spindle apparatus with the air bearing may further include: an air bearing part configured to rotatably support the shaft part, wherein the flow path may further include: a second supply flow path configured to guide external air to an edge of the housing through a rear end of the housing; a housing cooling flow path branched from the second supply flow path and guiding the external air to a front end of the housing along the edge; and a bearing supply flow path branched from the housing cooling flow path and guiding the external air to the air bearing part.

The ultrasonic spindle apparatus with the air bearing may further include: a driving part including a stator provided inside the housing and a rotor coupled to the outer side of the shaft part to rotate the shaft relative to the stator, wherein the air bearing part may include: a front radial bearing part configured to rotatably support a front end of the shaft part in a radial direction; and a rear radial bearing part configured to rotatably support a rear end of the shaft part in a radial direction, wherein the bearing supply flow path may include: a first bearing flow path configured to supply air to the rear radial bearing part; a second bearing flow path configured to supply air to the front radial bearing part; and a connection bearing flow path configured to communicate with the first and second bearing flow paths and to guide the air from the first bearing flow path between the stator and the rotor.

The air bearing part may further include: a thrust bearing part configured to rotatably support a front end of the shaft part in an axial direction, wherein the bearing supply flow path further may include: a third bearing flow path configured to guide the air from the second bearing flow path to the thrust bearing part.

A shaft flange having an outer diameter greater than that of the shaft part may be provided at the front end of the shaft part, wherein the thrust bearing part may include: a front thrust bearing part configured to rotatably support a front surface of the shaft flange in an axial direction; and a rear thrust bearing part configured to rotatably support a rear surface of the shaft flange in an axial direction.

The flow path may further include: a front end discharge flow path configured to discharge the air inside the housing to the outside through an outer circumferential surface of the tool horn, wherein a portion of the external air introduced into the housing through the first and second supply flow paths may be discharged to the outside through the front end discharge flow path.

### ADVANTAGEOUS EFFECTS

As described above, according to the embodiment of the present invention, the ultrasonic spindle apparatus with the air bearing may provide an effect of discharging dust generated by wear of the carbon brush and cooling the spindle whose temperature has increased due to heat generated by a vibrator.

### BRIEF DESCRIPTION OF THE DRAWINGS

FIG. 1 is a perspective view of an ultrasonic spindle apparatus with an air bearing according to an embodiment of the present invention.
FIG. 2 is a cross-sectional view of the ultrasonic spindle apparatus with an air bearing shown in FIG. 1.
FIGS. 3 and 4 are diagrams illustrating a first supply passage of the ultrasonic spindle apparatus with an air bearing and passages branched therefrom.
FIG. 5 is a diagram illustrating a structure of a coupling pin for explaining a connecting cooling passage.
FIG. 6 is a diagram illustrating a second supply passage of the ultrasonic spindle apparatus with an air bearing and passages branched therefrom.

### MODE FOR CARRYING OUT THE INVENTION

Hereinafter, descriptions of following embodiments are intended to be illustrative, and those with ordinary skill in the technical field of the present disclosure pertains will be understood that the present disclosure can be carried out in other specific forms without changing the technical idea or essential features. However, in describing the present disclosure, if it is determined that detailed descriptions of related known functions or components may unnecessarily obscure the gist of the present disclosure, the detailed descriptions and specific illustrations will be omitted. Additionally, in order to facilitate understanding of the invention, the attached drawings are not drawn to scale and the dimensions of some components may be exaggerated.

The first and second terms used in this application may be used to describe various components, but the components should not be limited by the terms. Terms are only used to distinguish one component from other components.

In addition, in the following description, the technical terms are used only for explaining a specific exemplary embodiment while not limiting the present disclosure. The singular forms include the plural forms as well, unless the context clearly indicates otherwise. In this application, terms such as "include," "constituted by," or "consist of" are intended to designate the presence of features, numbers, steps, operations, components, parts, or a combination thereof described in the specification, but it should be understood that this does not preclude the presence or addition of one or more other features, numbers, steps, operations, components, parts, or combinations thereof.

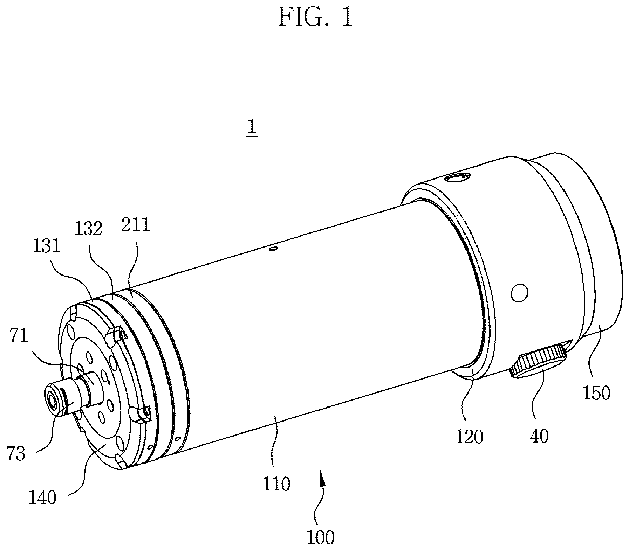

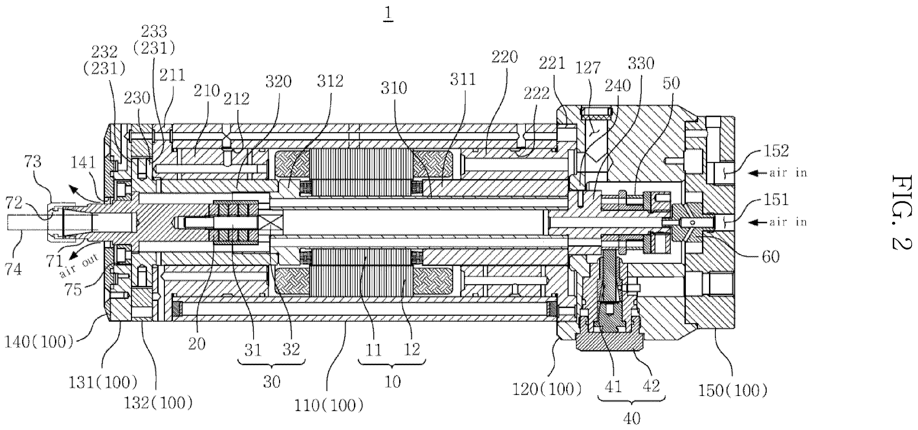

Hereinafter, an ultrasonic spindle apparatus with an air bearing (hereinafter, referred to as an "ultrasonic air bearing spindle apparatus") according to one embodiment of the present invention will be described with reference to FIG. 1 and FIG. 2. FIG. 1 is a perspective view of an ultrasonic spindle apparatus with air bearing according to one embodiment of the present invention, and FIG. 2 is a cross-sectional view of the ultrasonic spindle apparatus with the air bearing illustrated in FIG. 1.

Referring to FIGS. 1 and 2, an ultrasonic spindle apparatus with an air bearing 1 according to one embodiment of the present invention may include: a housing 100 in which a space is provided inside; shaft parts 310, 320, and 330 rotatably provided inside the housing 100; a hollow ultrasonic generator 20 that generates ultrasonic waves; a tool horn 71 coupled to the ultrasonic generator 20; a carbon brush 41 supplied with power from an external source; a wire (not shown) electrically connecting a slip ring 50 to the ultrasonic generator 20; and a flow path for guiding external air into the housing 100.

The housing 100 may be extended in one direction and have a space defined inside. The housing 100 may include: body parts 131, 132, 110, and 120; a front cover 140 coupled to a front end of the body parts 131, 132, 110, and 120; and a rear cover 150 coupled to a rear end of the body parts 131, 132, 110, and 120.

The body parts 131, 132, 110, and 120 may be extended in one direction and include: a middle body 110; a rear body 120 coupled to a rear end of the middle body 110; a second front body 132 coupled to a front end of the middle body 110; and a first front body 131 coupled to a front surface of the second front body 132.

The middle body 110 may have a hollow cylindrical shape and include an inner circumferential surface and an outer circumferential surface.

The rear body 120 has a space defined inside that communicates with the hollow of the middle body 110.

The first front body 131 may have a hollow ring shape. In the hollow of the first front body 131, a horn support part 75, which will be described later, may be provided and rotatably supported by the first front body 131. The horn support part 75 may rotate together with the tool horn 71.

The second front body 132 may be coupled to a rear surface of the first front body 131 and have a hollow ring shape. The second front body 132 may support a front radial bearing part 210 together with the middle body 110, with the front radial bearing part 210 interposed between the second front body 132 and the middle body 110. More specifically, the second front body 132 may support a front flange 211 of the front radial bearing part 210 together with the middle body 110.

The front cover 140 may be coupled to a front surface of the second front body 132 and have a hole defined in a central portion through which the tool horn 71 penetrates, which will be described later. An inner circumferential surface of the hole of the front cover 140 and an outer circumferential surface of the tool horn 71 may be spaced apart from each other to define a front discharge port 141.

The rear cover 150 may be coupled to a rear surface of the rear body 120. A first supply port 151 and a second supply port 152 may be defined to pass through the rear cover 150 so that external air is introduced and guided into the housing 100.

The shaft parts 310, 320, and 330 may include a front shaft 320, a rear shaft 310, and a conductive shaft 330.

The rear shaft 310 may be extended in one direction and have a space defined therein to serve as a flow path. A wire may be accommodated between an inner circumferential surface and an outer circumferential surface that define a thickness of the rear shaft 310.

A rotor 11 may be provided on the outer circumferential surface of the rear shaft 310. The rotor 11, together with the stator 12, may constitute an induction motor, which is a type of AC motor. In addition, a pair of rotor support parts 311 and 312 may be provided on the outer circumferential surface of the rear shaft 310 to support front and rear ends of the rotor 11.

The front shaft 320 may be extended in one direction and be coupled to a front end of the rear shaft 310. A space communicating with an internal space of the rear shaft 310 may be defined inside the front shaft 320. A shaft flange 230 having an outer diameter greater than that of the front shaft 320 may be provided at a front end portion of the front shaft 320.

The shaft flange 230 may be surrounded at least on its front and rear surfaces by external air discharged forward from the front radial bearing part 210, thereby providing a thrust bearing part 231.

The conductive shaft 330 may be extended in one direction and be coupled to a rear end of the rear shaft 310. A space communicating with an internal space of the rear shaft 310 may be defined in the conductive shaft 330. The conductive shaft 330 may be surrounded by a conductive slip ring 50, and thus an outer circumferential surface of the conductive shaft 330 may be in contact with an inner circumferential surface of the slip ring 50.

The ultrasonic generator 20 may receive electrical energy from an external ultrasonic oscillator and generates ultrasonic waves. For example, it may be a hollow piezoelectric element, and be coupled to a rear end of the tool horn 71 through the coupling pin 30.

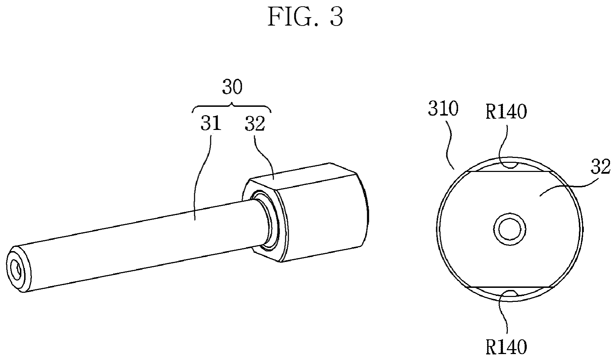

As shown in FIG. 3, the coupling pin 30 may include a pin body 31 inserted and coupled into the tool horn 71, and a pin head 32 provided on the pin body 31 and having a cross-sectional area greater than that of the pin body 31. A portion of an outer circumferential surface of the pin head 32 may be coupled to a part of an inner surface of the internal space of the rear shaft 310.

The tool horn 71 may be coupled to the ultrasonic generator 20. A front end portion of the tool horn 71 may pass through the first front body 131, the second front body 132, and the front cover 140 to protrude outside, and a rear end portion of the tool horn 71 may be accommodated in the front shaft 320. A collet 72 and a collet nut 73 may be provided at a front end of the tool horn 71 to allow a tool 74 to be coupled.

Meanwhile, a power supply part 40 may be provided to pass through a side surface of the rear body 120. The power supply part 40 may supply external power to the slip ring 50 and include a carbon brush 41 and a brush housing 42 that receives and supports the carbon brush 41.

The carbon brush 41 may be elastically supported by an elastic member so as to be in contact with the slip ring 50 at a constant pressure. The slip ring 50 may be electrically connected to the ultrasonic generator 20 via a wire.

The rotor 11 and the stator 12 described above may constitute a driving part 10 that generates driving force for rotating the shaft. The rotor 11 may be coupled to the outer circumferential surface of the rear shaft 310, and the stator 12 may be coupled to the inner circumferential surface of the middle body 110.

The ultrasonic spindle apparatus with an air bearing 1 according to one embodiment of the present invention may further include an air bearing part that rotatably supports the shaft parts 310, 320, and 330.

The air bearing part may perform a function of minimizing friction generated during rotation by allowing inflow of external air to rotatably support the shaft parts 310, 320, and 330. The air bearing part may include radial bearing parts 210 and 220 that radially support the shaft, and a thrust bearing part 231 that axially supports the shaft.

The radial bearing parts 210 and 220 may include a front radial bearing part 210 that rotatably supports the front shaft 320, and a rear radial bearing part 220 that rotatably supports a rear end portion of the rear shaft 310.

The front radial bearing part 210 may have a space defined inside to receive the front shaft 320, and a flow path and a nozzle connected to the flow path may be provided therein to strongly discharge external air toward an outer circumferential surface of the front shaft 320, thereby levitating the shaft. A front flange 211 having an outer diameter greater than that of a rear end portion of the front radial bearing part 210 may be provided at a front end of the front radial bearing part 210.

The rear radial bearing part 220 may have a space defined inside to receive a rear end portion of the rear shaft 310, and a flow path and a nozzle connected to the flow path may be provided therein to strongly discharge external air toward an outer circumferential surface of the rear shaft 310, thereby levitating the shaft. A rear flange 221 having an outer diameter greater than that of a front end portion of the rear radial bearing part 220 may be provided at a rear end of the rear radial bearing part 220.

When external air moves from a flow path defined in the middle body 110 to the front radial bearing part 210 and the rear radial bearing part 220, each of the front radial bearing part 210 and the rear radial bearing part 220 may receive the external air through a plurality of ring-shaped outer grooves 212 and 222 surrounding the outer circumferential surfaces and introduces the air into a plurality of flow paths radially defined therein.

The thrust bearing part 231 may include a front thrust bearing part 232 that rotatably supports a front surface of the shaft flange 230, and a rear thrust bearing part 233 that rotatably supports a rear surface of the shaft flange 230.

A rear thrust bearing part 233 may be provided as the rear surface of the shaft flange 230 is spaced apart from a front portion of the front radial bearing part 210 by external air discharged forward from the front radial bearing part 210.

A front thrust bearing part 232 may be provided as external air, after colliding with a rear surface of the shaft flange 230, moves to a front surface of the shaft flange 230 and causes the front surface of the shaft flange 230 to be spaced apart from a rear surface of a first front body 131.

Meanwhile, an air dispenser 60 that distributes external air introduced through the first supply port 151 may be provided at the first supply port 151 of the rear cover 150.

The air dispenser 60 may include two branched flow paths therein. One of the branched flow paths may be in communication with the interior of the conductive shaft 330, and the other may be in communication with a space between the slip ring 50 and the rear body 120.

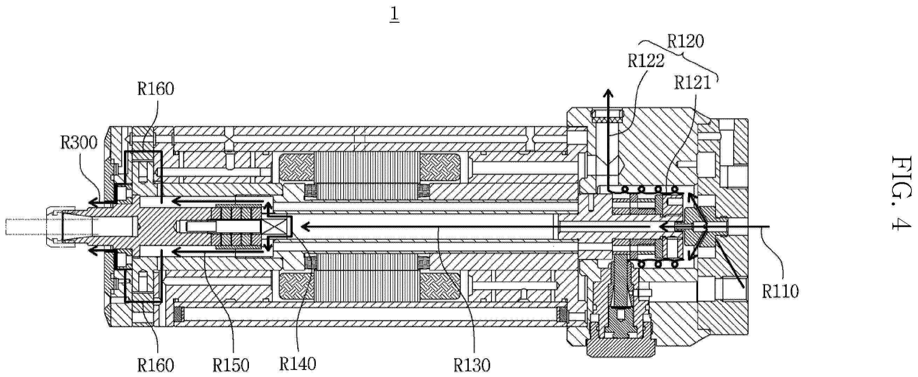

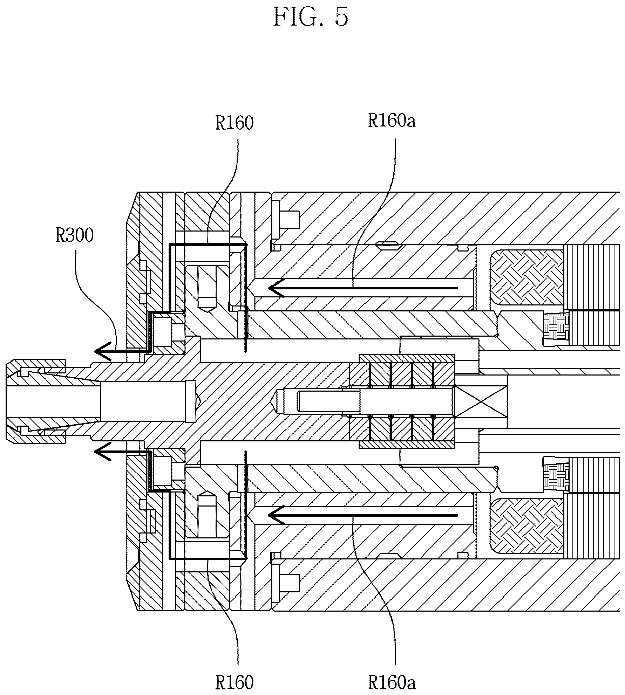

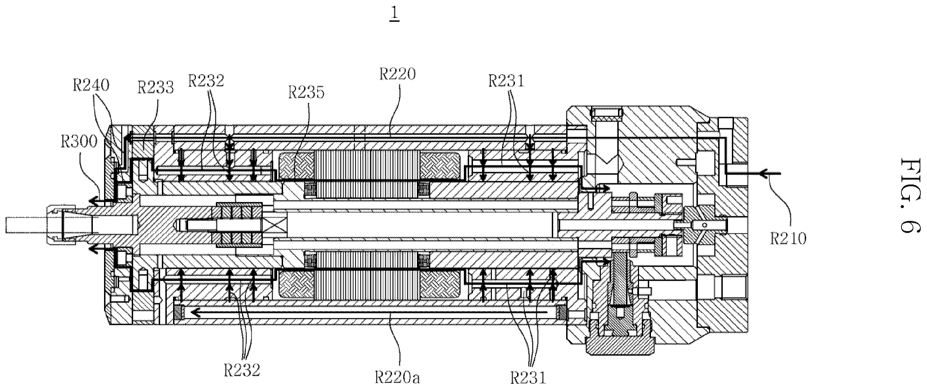

A flow path that is defined inside a housing 100 of an ultrasonic air bearing spindle apparatus 1 according to an embodiment of the present invention and communicates with the outside will be described with reference to FIGS. 4 to 6. FIGS. 4 and 5 are diagrams illustrating a first supply flow path R110 of the ultrasonic air bearing spindle apparatus 1 and a flow path branched therefrom, and FIG. 6 is a diagram illustrating a second supply flow path R210 of the ultrasonic air bearing spindle apparatus 1 and a flow path branched therefrom.

Referring to FIGS. 4 to 6, the flow path may include a first supply flow path R110, a dust discharge flow path R120, and cooling flow paths R130, R140, R150, and R160 that are branched from the first supply flow path R110.

The first supply flow path R110 may guide external air into the air dispenser 60 through the first supply port 151.

The dust discharge flow path R120 may include a first dust discharge flow path R121 configured to guide the external air to surround the rear end of the shaft, and a second dust discharge flow path R122 configured to guide the external air of the first dust discharge flow path R121 to the outside of the housing 100.

The first dust discharge flow path R121 may guide the external air, introduced into the air dispenser 60, into a space defined between the slip ring 50 and an inner circumferential surface of the conductive shaft 330.

The second dust discharge flow path R122 may discharge the external air of the first dust discharge flow path R121 through a rear discharge pipe 127 that is defined to penetrate radially outward of the rear body 120.

In this process, dust generated from the carbon brush 41, which is worn by contact with the slip ring 50, may be discharged to the outside.

Since the dust discharge flow path R120 is in contact with the entire remaining surface area of the slip ring 50 except for the surface area in contact with the carbon brush 41, dust may be effectively discharged and a cooling effect for the slip ring 50 may also be obtained.

Meanwhile, external air supplied from the rear radial bearing part 220 and passing between a rear surface of a rotor support part 311 and a front surface of a rear body 120 may join the dust discharge flow path R120.

The cooling flow paths R130, R140, R150, and R160 may include a first inner cooling flow path R130, a second inner cooling flow path R150, a connection cooling flow path R140, and an outer cooling flow path R160.

The first inner cooling flow path R130 may guide the external air introduced into the air dispenser 60 to longitudinally pass through the inside of the rear shaft 310. In this process, a central portion of the housing 100 and an inner circumferential surface of the driving part 10 may be effectively cooled.

The connection cooling flow path R140 may connect the first inner cooling flow path R130 and the second inner cooling flow path R150, and may guide the external air of the first inner cooling flow path R130 to flow around the pin head 32 and the rear end of the ultrasonic generator 20.

The second inner cooling flow path R150 may guide the external air of the connection cooling flow path R140 to flow around the outer circumferential surface of the ultrasonic generator 20.

While the external air flows along the connection cooling flow path R140 and the second inner cooling flow path R150, heat transferred to the pin head 32 and heat remaining in the ultrasonic generator 20 among the heat generated by the ultrasonic generator 20 may be cooled.

The outer cooling flow path R160 may guide the external air from the second inner cooling flow path R150 to the radially outer side of the front shaft parts 310, 320, and 330. The outer cooling flow path R160 may then guide the external air to pass forward through the second front body 132, subsequently guide the external air to pass radially inward through the first front body 131, and finally guide the external air to be discharged through the front-end discharge flow path R300 provided at the front-end discharge port 141. During this process, the front end portion of the housing 100 may be cooled.

Meanwhile, the flow path may include the second supply flow path R210, a housing cooling flow path R220, and bearing supply flow paths R231, R232, and R233.

The second supply flow path R210 may guide the external air introduced through the second supply port 152 to the radially outer side of the rear cover 150, and then guide the external air to move forward.

The housing cooling flow path R220 may extend in a first direction and pass between an outer circumferential surface and an inner circumferential surface defining a thickness of the middle body 110. The housing cooling flow path R220 may guide the external air of the second supply flow path R210 forward along the edges of the rear body 120, rear flange 221, middle body 110, front flange 211, and shaft flange 230. In this process, a peripheral portion of the housing 100 and an outer circumferential surface of the driving part 10 may be effectively cooled.

Meanwhile, a cooling water flow path R220a may be additionally provided between the outer and inner circumferential surfaces of the middle body 110, through which cooling water is supplied and flows. Since the cooling water flow path R220a is provided, the housing 100 may be cooled by external air and cooling water, and components other than the housing 100 may also be additionally cooled.

The bearing supply flow paths R231, R232, and R233 may branch from the housing cooling flow path R220 and guide the external air of the housing cooling flow path R220 to the air bearing parts. The bearing supply flow paths R231, R232, and R233 may include radial flow paths R231 and R232 for supplying external air to the radial bearing parts 210 and 220, and a thrust flow path R233 for supplying external air to the thrust bearing part 231.

The radial flow paths R231 and R232 may include a front radial flow path R232 for supplying external air to the front radial bearing part 210 and a rear radial flow path R231 for supplying external air to the rear radial bearing part 220.

The thrust flow path R233 may guide the external air of the front radial flow path R232 to pass through the rear surface, side surface, and front surface of the shaft flange 230 as described above.

Meanwhile, the bearing supply flow paths R231, R232, R233, and R235 may further include a connection bearing flow path R235 configured to connect the front radial flow path R232 and the rear radial flow path R231.

The connection bearing flow path may guide the external air of the rear radial flow path R231 into a gap between the stator 12 and the rotor 11, and then guide the external air to the front radial flow path R232. In this process, a central portion of the driving part 10 may be cooled.

Meanwhile, the housing cooling flow path R220 and the thrust flow path R233 may be in communication with a front body flow path R240. The front body flow path R240 may be defined in the first front body 131 to extend radially inward, and may be in communication with the front-end discharge flow path R300 defined between the inner circumferential surface of the front cover 140 and the outer circumferential surface of the tool horn 71.

While the embodiments of the inventive concept have been described with reference to the specific embodiments, it will be apparent to those skilled in the art that various changes and modifications may be made without departing from the spirit and scope of the invention as defined in the following claims.

### Description of the Symbols

- 1:: Ultrasonic Spindle Apparatus with Air Bearing
- 10:: Driving part
- 20:: Ultra sonic generator
- 40:: Power supply part
- 71:: Tool horn
- 100:: Housing
- 131, 132, 110, and 120:: Body parts
- 140:: Front cover
- 150:: Rear cover
- 210 and 220:: Radial bearing parts
- 231:: Thrust bearing part
- 310, 320, and 330:: Shaft parts

## Claims

1. An ultrasonic spindle apparatus with an air bearing comprising:
a housing having an internal space defined therein;
a hollow shaft part rotatably provided inside the housing;
an ultrasonic generator having a hollow shape and provided in the hollow of the shaft part and configured to generate ultrasonic waves upon receiving electric power;
a tool horn provided at a front end of the shaft part and coupled to the ultrasonic generator;
a carbon brush configured to receive electric power from an external source and be in contact with a conductive slip ring at a rear end of the shaft;
a wire configured to electrically connect the slip ring and the ultrasonic generator to each other; and
a flow path defined in the housing to communicate with the outside,
wherein the flow path comprises:
a first supply flow path configured to guide external air into the housing through a rear end of the housing;
a dust discharge flow path branched from the first supply flow path and guiding the external air toward the carbon brush; and
a cooling flow path branched from the first supply flow path and guiding the external air toward the ultrasonic generator.

2. The ultrasonic spindle apparatus with the air bearing of claim 1, wherein the dust discharge flow path comprises:
a first dust discharge flow path configured to guide the external air to surround the rear end of the shaft; and
a second dust discharge flow path configured to guide the air from the first dust discharge flow path to the outside of the housing.

3. The ultrasonic spindle apparatus with the air bearing of claim 1, wherein the cooling flow path comprises:
a first inner cooling flow path penetrating through the shaft in a longitudinal direction; and
a second inner cooling flow path configured to guide the air from the first inner cooling flow path to surround an outer circumferential surface of the ultrasonic generator.

4. The ultrasonic spindle apparatus with the air bearing of claim 3, further comprising:
a coupling pin comprising a pin body passing through the ultrasonic generator and coupled to the tool horn, and a pin head provided on the pin body, having a cross-sectional area greater than that of the pin body, and partially coupled to the inside of the first inner cooling flow path,
wherein the cooling flow path further comprises:
a connecting cooling flow path configured to connect the first inner cooling flow path and the second inner cooling flow path to each other and to guide the air in the first inner cooling flow path to sequentially pass through the pin head and the ultrasonic generator.

5. The ultrasonic spindle apparatus with the air bearing of claim 4, wherein the cooling flow path further comprises an outer cooling flow path configured to guide the air from the second inner cooling flow path radially outward to cool the housing.

6. The ultrasonic spindle apparatus with the air bearing of claim 1, further comprising:
an air bearing part configured to rotatably support the shaft part,
wherein the flow path further comprises:
a second supply flow path configured to guide external air to an edge of the housing through a rear end of the housing;
a housing cooling flow path branched from the second supply flow path and guiding the external air to a front end of the housing along the edge; and
a bearing supply flow path branched from the housing cooling flow path and guiding the external air to the air bearing part.

7. The ultrasonic spindle apparatus with the air bearing of claim 6, further comprising:
a driving part comprising a stator provided inside the housing and a rotor coupled to the outer side of the shaft part to rotate the shaft relative to the stator,
wherein the air bearing part comprises:
a front radial bearing part configured to rotatably support a front end of the shaft part in a radial direction; and
a rear radial bearing part configured to rotatably support a rear end of the shaft part in a radial direction,
wherein the bearing supply flow path comprises:
a first bearing flow path configured to supply air to the rear radial bearing part;
a second bearing flow path configured to supply air to the front radial bearing part; and
a connection bearing flow path configured to communicate with the first and second bearing flow paths and to guide the air from the first bearing flow path between the stator and the rotor.

8. The ultrasonic spindle apparatus with the air bearing spindle of claim 7, wherein the air bearing part further comprises:
a thrust bearing part configured to rotatably support a front end of the shaft part in an axial direction,
wherein the bearing supply flow path further comprises:
a third bearing flow path configured to guide the air from the second bearing flow path to the thrust bearing part.

9. The ultrasonic spindle apparatus with the air bearing spindle of claim 8, wherein a shaft flange having an outer diameter greater than that of the shaft part is provided at the front end of the shaft part,
wherein the thrust bearing part comprises:
a front thrust bearing part configured to rotatably support a front surface of the shaft flange in an axial direction; and
a rear thrust bearing part configured to rotatably support a rear surface of the shaft flange in an axial direction.

10. The ultrasonic spindle apparatus with the air bearing of claim 6, wherein the flow path further comprises:
a front end discharge flow path configured to discharge the air inside the housing to the outside through an outer circumferential surface of the tool horn,
wherein a portion of the external air introduced into the housing through the first and second supply flow paths is discharged to the outside through the front end discharge flow path.
